# FASCICULE DE BREVET EUROPEEN

(11) **EP 2 513 942 B1**
(45) Date de publication et mention de la délivrance du brevet: **05.03.2014**
(21) Numéro de dépôt: 10790583.8
(22) Date de dépôt: 16.11.2010
(51) Int. Cl.: H01H 83/10, H02H 9/04, H01H 71/20, H01H 77/02

(54) **ENSEMBLE DE PROTECTION CONTRE LES SURTENSIONS**
SCHUTZKOMBINATION GEGEN ÜBERSPANNUNGEN
APPARATUS COMBINATION FOR THE PROTECTION AGAINST OVERVOLTAGE

(30) Priorité: 18.12.2009 FR 0906167
(43) Date de publication de la demande: 24.10.2012
(73) Titulaire: Schneider Electric Industries SAS, 92500 Rueil-Malmaison (FR)
(72) Inventeur: DOMEJEAN, Eric, F-38340 Voreppe (FR); CHABERT, Christophe, F-38210 Polienas (FR)
(74) Mandataire: Picard, Laurent
(86) Numéro de dépôt international: PCT/FR2010/000767
(87) Numéro de publication internationale: WO 2011/073540

(56) Documents cités:
- EP-A1- 0 441 722
- EP-A1- 1 607 995
- EP-A1- 2 096 657

## Description

### DOMAINE TECHNIQUE DE L'INVENTION

L'invention est relative à un ensemble de protection contre les surtensions comprenant un module de protection contre des surtensions comportant au moins une varistance ayant un seuil énergétique Maxi de fonctionnement. Un appareil de coupure électrique comprend des entrées destinées à être connectées à une ligne à protéger, des contacts principaux commandés par un mécanisme de déclenchement, et des sorties connectés au module de protection contre les surtensions. Les moyens d'actionnement mécanique dudit module étant interconnectés aux moyens de déclenchement pour actionner l'ouverture des contacts principaux. L'ensemble de protection contre les surtensions comprend des moyens de déconnexion aptes à commander le mécanisme de déclenchement avant que ladite varistance n'atteigne son niveau énergétique Maxi de fonctionnement.

### ETAT DE LA TECHNIQUE ANTERIEURE

Il est connu d'associer un dispositif de protection contre les surtensions comportant un limiteur de surtension à éléments non linéaires variables avec la tension avec un dispositif de coupure électrique actionné par un mécanisme d'actionnement. Le limiteur de surtension et le dispositif de coupure électrique sont connectés en série.

Les limiteurs de surtension appelés parafoudres intègrent des composants parasurtenseurs tels que des varistances, des éclateurs à gaz ou des diodes transil Chaque composant parasurtenseur comporte son propre mode de fin de vie qui dépend de la technologie utilisée.

En particulier pour les varistances, l'état de l'art décrit 2 modes de fin de vie distincts. Le premier mode de fin de vie consiste en un échauffement lié au passage d'un courant de fuite à travers la varistance. En général, ce courant de fuite augmente dans le temps lorsque le vieillissement de la varistance s'accélère.

L'autre mode de dégradation consiste en une mise en court-circuit rapide de la varistance. Ce type de défaut se produit en présence un choc de foudre ou d'une surtension industrielle du réseau qui dépassent la capacité énergétique du composant.

Tel que décrit dans le document EP1607995, le dispositif de coupure électrique peut adopter une position de déclenchement et une position d'enclenchement correspondant respectivement à l'état ouvert et à l'état fermé des contacts électriques. Un circuit de déclenchement coopère avec le mécanisme d'actionnement pour provoquer le déplacement des contacts du dispositif de déconnexion vers l'état ouvert notamment en cas de destruction du limiteur de surtension notamment en fin de vie desdits éléments non linéaires. Le limiteur de surtension comprenant notamment une varistance connectée à un séparateur thermique. En cas d'échauffement trop important de la varistance suite à un défaut de fonctionnement, la fusion du séparateur thermique agit directement sur le mécanisme d'actionnement et provoque l'ouverture des contacts électriques du dispositif de coupure électrique. Le séparateur thermique est placé dans un environnement de la varistance et s'échauffe par conduction indirecte.

On entend par conduction indirecte le fait que le séparateur thermique n'est pas traversé par le courant électrique qui traverse la varistance. On entend par conduction directe le fait que le séparateur thermique est traversé par un courant électrique.

L'utilisation d'un séparateur thermique s'échauffant notamment par conduction indirecte présente parfois des inconvénients. Le calibrage du séparateur thermique en thermes de choix de matériau et en thermes de volume de matériau utilisé pour réaliser le séparateur est contraignant. Le séparateur thermique est généralement calibré pour fondre suite à échauffement de la varistance qui est traversée par des courants de fuite. Cependant, ce même séparateur thermique n'est pas destiné à fondre lorsque la varistance chauffe suite à un choc de foudre. En cas de fusion du séparateur thermique suite à un choc de foudre entrainerait une indisponibilité du limiteur de surtension pour des chocs de foudres futurs, cette dernière situation n'étant pas souhaitable.

Lors de présence sur le réseau de surtensions temporaires apparaissant lors d'un défaut à la terre ou un délestage sur le réseau de distribution publique, l'énergie dissipée dans le parafoudre peut être importante et provoquer rapidement la destruction des composants parasurtenseurs. Ces surtensions temporaires apparaissant sur le réseau sont appelées par la suite TOV (Temporary Over Voltage). Le courant de défaut résultant d'une TOV provoque également un échauffement de la varistance détecté par un séparateur thermique. L'amplitude du courant de défaut est dans ce cas beaucoup plus importante que dans le cas de courant de fuite lié au vieillissement de la varistance. Ce séparateur thermique doit alors théoriquement intervenir avec une constante de temps relativement courte (quelques secondes) pour parer l'influence des TOV et avec une constante de temps relativement longue (quelques minutes, voire quelques heures) pour parer au défaut de la varistance générant de faibles courants de fuite. En outre, ce séparateur thermique ne doit pas intervenir en présence de choc de foudre.

Actuellement, tel que décrit dans la demande de brevet FR284678, certains dispositifs électromagnétiques de déclenchement permettent de protéger les composants parasurtenseur lorsque des courants de court-circuit traversent ces composants. Pour assurer la fonction parafoudre en garantissant une tension aux bornes de l'appareil inférieure à 2,5 kV lorsqu'un courant de foudre de 25kA passe à travers celui-ci, il est nécessaire de minimiser l'impédance totale des composants parasurtenseurs et des dispositifs de déconnexion placés en série de façon ne pas augmenter la tension de protection du dispositif global.

Si l'impédance totale est trop élevée de telle sorte que la tension de protection du parafoudre est supérieure à 2,5kV alors les charges sensibles placées en parallèle du parafoudre ne seront pas protégées correctement contre les risques d'amorçages.

Si la plage de déclenchement est étendue et notamment si l'on cherche à obtenir un déclenchement pour des courants électriques de faibles intensité, typiquement de quelques ampères à quelques dizaine d'ampères alors les dispositifs électromagnétiques de déclenchement ne sont pas totalement adaptés.

A titre d'exemple, le dispositif de protection doit déclencher à partir de 30A pour assurer une zone de recouvrement avec la protection thermique. A l'absence de recouvrement, il est possible que le composant parasurtenseur se mette en court-circuit sans que ce défaut soit vu par un dispositif de protection. Avec un dispositif électromagnétique de déclenchement tel que par exemple un actionneur à palette, on constate que le nombre d'ampère tour (nombre de spires) est très important et, de fait, incompatible avec la valeur d"impédance maximum possible pour tenir le critère de tension de protection.

Les systèmes de protection existant ne permettent de garantir que la varistance ne passera pas en court-circuit quelque soit le mode de sollicitation et l'intensité du courant de défaut. Ainsi, lorsque la varistance passe en court-circuit, un arc électrique se forme entre les bornes du composant parasurtenseur. Si le niveau de courant de court-circuit de l'installation est très élevé (typiquement supérieur à 50kAefficace), les effets liés à cet arc électrique sont importants. En particulier, la surpression liée à l'arc électrique et générée dans l'enceinte où se trouvent les composants de protection foudre peut atteindre une valeur supérieure à la tenue mécanique de l'enveloppe. Celle-ci peut alors se rompre et laisser provoquer des amorçages externes avec le reste de l'installation électrique. De plus, même si l'amplitude du courant de court-circuit est limitée par le disjoncteur associé au parafoudre, il est possible que ce courant de court-circuit soit détecté par le disjoncteur (ou fusible) installé en amont et provoque l'ouverture de celui-ci. Cette ouverture non souhaitée peut amener une perte la distribution sur l'ensemble de l'installation électrique.

### EXPOSE DE L'INVENTION

L'invention vise donc à remédier aux inconvénients de l'état de la technique, de manière à proposer un ensemble de protection contre des surtensions

Les moyens de déconnexion de l'ensemble de protection selon l'invention comportent des premiers moyens de déconnexion thermique comprenant un premier seuil énergétique de déconnexion pour protéger la varistance contre des courants électriques dits faibles inférieurs à un premier niveau de courant. Des seconds moyens de déconnexion électronique comprennent un second seuil énergétique de déconnexion pour protéger la varistance contre des courants électriques dits moyens compris entre un premier et second niveau intermédiaire de courant. Des troisièmes moyens de déconnexion mécanique comprennent un troisième seuil énergétique de déconnexion pour protéger la varistance contre des courants électriques dits forts supérieurs à un troisième niveau de courant. Les trois seuils de déconnexion énergétique de déconnexion sont inférieurs au seuil énergétique Maxi de fonctionnement.

Selon un mode préférentiel de réalisation, le premier niveau de courant est supérieur ou égale au premier niveau intermédiaire de courant, le second niveau intermédiaire de courant strictement supérieur au premier niveau intermédiaire de courant ; et le second niveau intermédiaire de courant supérieur ou égal au troisième niveau de courant.

De préférence, les premiers moyens de déconnexion thermique reliés mécaniquement à la varistance comportent un premier séparateur thermique, la fusion du premier séparateur thermique en cas d'échauffement de la varistance agissant sur les moyens d'actionnement mécanique, ledit premier séparateur thermique comportant une première constante de temps de fusion et une première température de fusion. Les premiers moyens comportent un second séparateur thermique, la fusion du second séparateur thermique en cas d'échauffement de la varistance agissant sur les moyens d'actionnement mécanique, ledit second séparateur thermique comportant une seconde constante de temps de fusion et une seconde température de fusion, la seconde température de fusion étant supérieure à la première température de fusion, et la première constante de temps de fusion étant supérieure à la seconde constante de temps de fusion.

Avantageusement, les premiers moyens de déconnexion thermique comportent des moyens élastiques fournissant une force de déplacement destinée à entrainer en déplacement des moyens d'entraînement d'une première la position armée vers une position de déclenchement, les moyens d'entraînement étant retenu mécaniquement en position armée par lesdits premier et second séparateurs thermiques, la fusion d'un des deux séparateurs thermiques libérant le déplacement des moyens d'entraînement.

Selon un mode de développement, le premier séparateur thermique et le second séparateur thermique exercent respectivement une première et une seconde forces de retenu sur les moyens d'entraînement, lesdites forces de retenu s'exerçant de manière série sur les moyens d'entraînement, la fusion d'un séparateur thermique entraînant successivement l'annulation de l'une des forces de retenu et la libération du déplacement des moyens d'entrainement.

Selon un autre mode de développement, le premier séparateur thermique et le second séparateur thermique exercent respectivement un première et une seconde forces de retenu sur les moyens d'entraînement, lesdites forces de retenu s'exerçant de manière parallèle sur les moyens d'entraînement, la fusion d'un séparateur thermique entrainant successivement l'annulation d'une des deux forces de retenu, l'annulation de l'autre force de retenu et le déplacement des moyens d'entrainement.

Selon un mode préférentiel de réalisation, lesdits seconds moyens de déconnexion électronique comportent des moyens de mesure de courant reliés à des moyens de traitement.

Selon un mode préférentiel de réalisation, lesdits troisièmes moyens de déconnexion comportent un piston associé à une chambre de coupure de appareil de coupure électrique dans laquelle est intégré un contact électrique.

De préférence, ledit piston se déplace lors de l'apparition une onde de pression due à la répulsion du.contact électrique en présence de courants électriques dits forts, le déplacement du piston commandant le mécanisme de déclenchement.

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :
- la figure 1 représente une vue schématique d'un ensemble de protection selon un mode préférentiel de réalisation de l'invention ;
- les figures 2 et 3 représentent des vues schématique de l'ensemble de protection selon la figure 1 ;
- la figure 4 représente une vue en perspective d'un module de protection d'un ensemble de protection contre les surtensions selon la figure 1 ;
- les figures 5, 6, 7 représentent des vues de détail du fonctionnement module de protection selon la figure 4 ;
- la figure 8 représente une vue de coté d'un mode de réalisation du module de protection selon la figure 4 ;
- la figure 9 représente une vue en perspective d'un mode de réalisation du module de protection selon la figure 4 ;
- la figure 10 représente une vue en perspective d'un dispositif de déclenchement mécanique et d'un mécanisme de déclenchement de l'appareil de coupure de l'ensemble de protection selon la figure 1 ;
- la figure 11 représente une vue de détail en perspective d'un dispositif de déclenchement mécanique selon la figure 10 ;
- la figure 12 représente une courbe temps/courant représentative du niveau de protection de l'ensemble de protection selon la figure 1 ;
- la figure 13 représente une courbe d'échauffement du module de protection en cas d'échauffement rapide lié notamment à la présence d'une TOV ;
- la figure 14 représente une courbe d'échauffement du module de protection en cas de choc de foudre ;
- la figure 15 représente une courbe d'échauffement du module de protection en cas d'échauffement lent.

### DESCRIPTION DETAILLEE D'UN MODE DE REALISATION

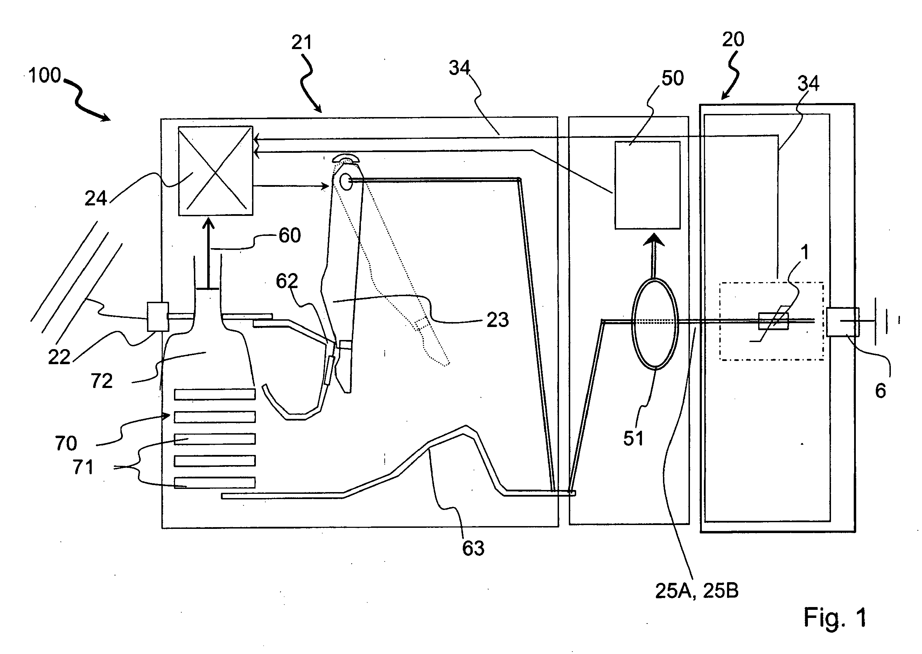

Tel que représenté sur les figures 1, 2 et 3, l'ensemble de protection contre des surtensions 100 selon l'invention comporte au moins un module de protection 20 destiné à être connecté à un appareil de coupure 21 électrique via des moyens d'actionnement mécanique 33.

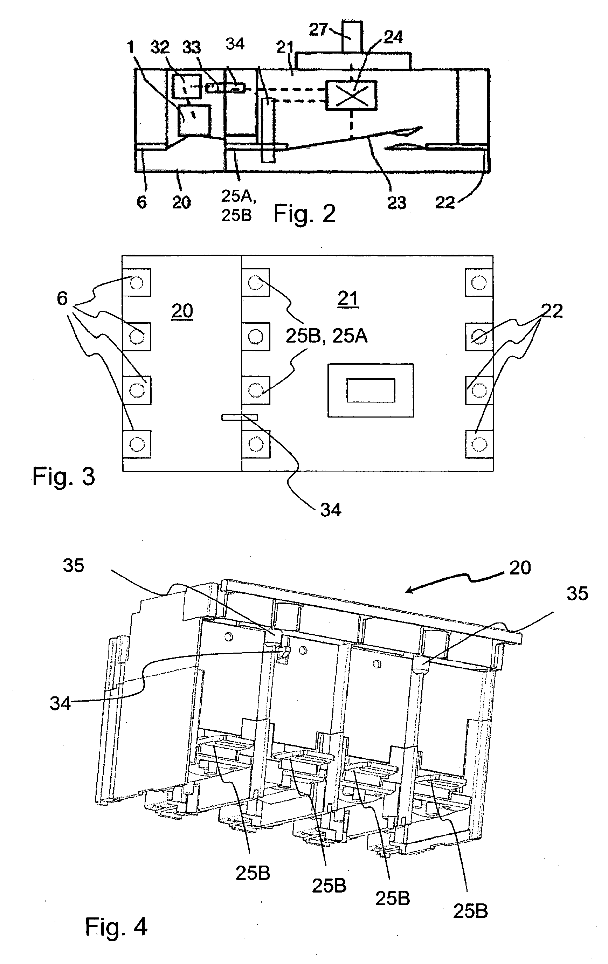

A titre d'exemple de réalisation représenté sur la figure 3, l'ensemble de protection contre des surtensions comporte un appareil de coupure 21 tétrapolaire. Le module de protection 20 dudit ensemble de protection 100 comporte alors quatre varistances 1 connectées respectivement à un pole de l'appareil de coupure 21.

Selon un mode particulier de réalisation, l'ensemble de protection 100 contre des surtensions selon l'invention est destiné à être connecté entre d'une part à au moins une ligne de courant et d'autre part à la terre. Selon un autre mode particulier de réalisation non représenté, l'ensemble de protection 100 contre des surtensions selon l'invention est destiné à être connecté entre une phase et le neutre. A titre d'exemple tel que représenté sur la figure 1, l'ensemble de protection 100 contre des surtensions selon l'invention est destiné à être connecté entre d'une part au moins une ligne de courant via au moins un première borne de connexion 22 de l'appareil de coupure 21 et d'autre part à la terre via au moins un connecteur 6 du module de protection 20.

L'appareil de coupure électrique 21 comprend au moins une première borne de connexion 22 destinée à être connectée à une ligne à protéger et au moins une seconde borne de connexion 25A destinée à être connecté à une borne de connexion 25B au module de protection 20 contre les surtensions. L'appareil de coupure 21 comporte des contacts principaux commandés par un mécanisme de déclenchement 24. Les moyens de déclenchement 24, 27 sont destinés à être interconnectés avec des moyens d'actionnement mécanique 33 du module de protection 20 contre les surtensions.

Selon un mode de réalisation de l'invention, l'appareil de coupure 21 comporte une première électrode de raccordement 62 en liaison électrique avec ladite au moins une première borne de connexion 22 et une deuxième électrode mobile 23 en liaison électrique avec ladite au moins une seconde borne de connexion 25A.

Un premier contact électrique est placé sur la première électrode de raccordement 62 et un second contact électrique est positionné sur la deuxième électrode mobile 23. L'électrode mobile 23 est en contact avec l'électrode de raccordement 62 lorsque les contacts électriques sont fermés.

L'appareil de coupure 21 comporte en outre un mécanisme de déclenchement 24. Ledit mécanisme est destiné à être actionné pour déplacer l'électrode mobile 23 et provoquer mécaniquement l'ouverture permanente des contacts électriques.

L'appareil de coupure 21 est calibré pour écouler des courants électriques d'ondes de foudre de type 10/350 ou 8/20 sans que le mécanisme de déclenchement 24 ne soit actionné. En effet, le calibrage de l'appareil de coupure 21 est réalisé de manière à ce que le mécanisme de déclenchement 24 reste verrouillé en présence de courants électriques d'ondes de foudre de type 10/350 ou 8/20 lorsque l'énergie est inférieure à l'énergie maximale supportée par le composant parasurtenseur. En effet, le mécanisme de déclenchement 24 ne provoque pas l'ouverture permanente des contacts à chaque fois qu'il est traversé par un courant électrique d'onde de foudre. En outre, l'appareil de coupure 21 est aussi calibré pour actionner le mécanisme de déclenchement 24 et provoquer l'ouverture permanente des contacts pour des courants alternatifs de court-circuit.

Le seuil énergiquement de déclenchement est directement dépendant des courants électriques d'ondes de foudre de type 10/350 ou 8/20 pour lesquels l'ouverture des contacts n'est pas souhaitée.

Le dispositif de protection comporte au moins une chambre d'extinction 70 de l'arc électrique. Ladite au moins une chambre d'extinction d'arc 70 comporte des ailettes de désionisation 71 destinées au refroidissement d'un arc électrique et à son extinction.

Selon une variante non représentée de l'appareil de coupure 21, ledit appareil comprend au moins un bloc de coupure unipolaire aussi appelé ampoule. Chaque bloc de coupure unipolaire permet la coupure d'un seul pôle. Ledit bloc se présente avantageusement sous forme d'un boîtier plat en plastique moulé, avec deux grandes faces parallèles distantes d'une épaisseur. Le boîtier est formé de deux parties, de préférence symétriques en miroir, solidarisées l'une à l'autre sur leur grande face par tout moyen adapté. Le bloc de coupure unipolaire comprend un mécanisme de coupure logé dans le boîtier. Le mécanisme de coupure est de préférence à double coupure rotative. Le mécanisme de coupure comprend un pont de contacts mobile rotatif autour d'un d'axe de rotation. Le pont de contact mobile est monté flottant dans un barreau rotatif ayant un orifice transversal de logement dudit pont de contacts. Ledit pont fait saillie de part et d'autre du barreau. Ledit barreau rotatif est intercalé entre les deux faces latérales du boitier bloc de coupure. Le pont de contact mobile comprend à chaque extrémité une plage de contact. Le bloc de coupure comporte une paire de contacts fixes. Chaque contact fixe est destiné coopérer avec une plage de contact du pont de contacts mobile. Un premier contact fixe est destiné à être raccordé à la ligne de courant par une plage amont. Un second contact fixe est destiné à être raccordé au module de protection contre les surtensions. Ledit pont est monté pivotant entre une position d'ouverture dans laquelle les plages de contact sont écartées des contacts fixes et une position de passage de courant dans laquelle elles sont en contact avec chacun des contacts fixes. Les plages de contact du pont de contact sont de préférence placées symétriquement par rapport à l'axe de rotation. Le bloc de coupure unipolaire comprend deux chambres de coupure d'arc pour l'extinction des arcs électriques. Chaque chambre de coupure s'ouvre sur un volume d'ouverture entre une plage de contact du pont de contacts et un contact fixe. Chaque chambre de coupure est délimitée par deux parois latérales, une paroi postérieure éloignée du volume d'ouverture, une paroi inférieure proche du contact fixe et une paroi supérieure. Chaque chambre de coupure comprend un empilement d'au moins deux d'ailettes de désionisation séparées les unes des autres par un espace d'échange des gaz de coupure.

Selon un mode de réalisation de l'invention, le module de protection 20 comporte au moins un composant parasurtenseur comportant au moins une borne reliée à une borne de connexion 25B du module de protection 20 et une seconde borne reliée à un connecteur 6 dudit module. Selon un premier exemple de réalisation tel que représenté sur la figure 1, le composant parasurtenseur peut comporter une varistance 1. Selon un second exemple de réalisation non représenté, le composant parasurtenseur peut comporter une varistance en série avec un éclateur.

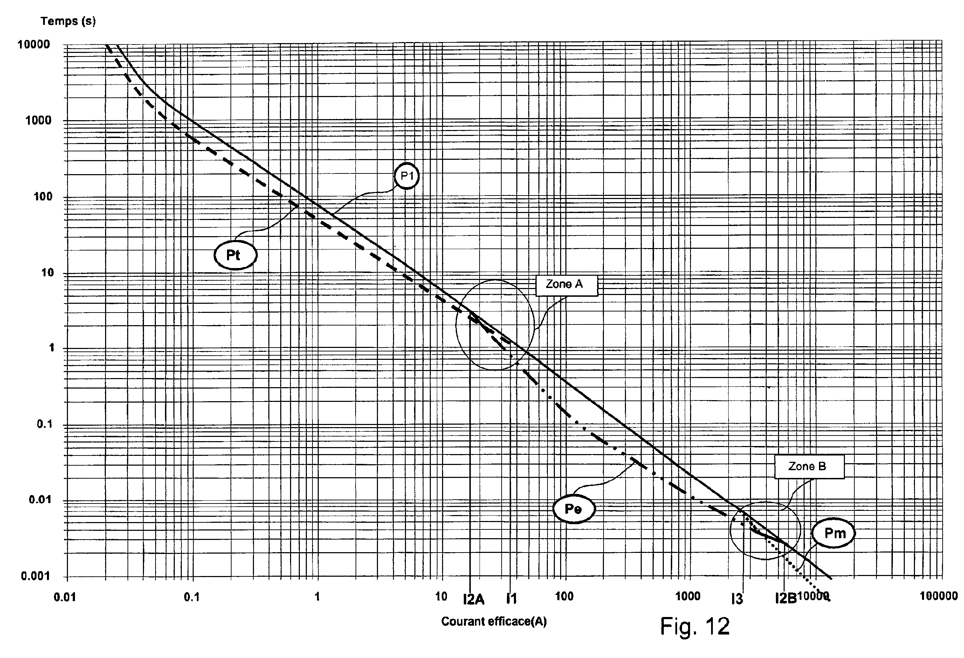

Ladite au moins une varistance 1 a un seuil énergétique Maxi de fonctionnement au-delà duquel son fonctionnement n'est plus garanti. Ce seuil de fonctionnement est représenté sur la courbe temps/courant P1 sur la figure 12.

Selon une variante de réalisation, ledit module de protection 20 comporte de préférence des moyens de détrompage destinés à collaborer avec l'appareil 21 de coupure. A titre d'exemple les moyens de détrompage comportent des protubérances 35 destinées à venir s'emboiter dans des empreintes femelles (non représentées) placées dans le dispositif de coupure 21.

L'ensemble de protection 100 selon un mode préférentiel de l'invention comporte un système de déconnexion coordonné à trois étages permettant de garantir que le composant parasurtenseur ne passera pas en court-circuit quelque soit le mode de sollicitation et l'intensité du courant de défaut. Ainsi, comme représenté sur la figure 12, l'ensemble de protection 100 contre les surtensions comprend des moyens de déconnexion aptes à commander le mécanisme de déclenchement 24 avant que ledit composant parasurtenseur 1 n'atteigne son niveau énergétique Maxi de fonctionnement.

Selon un mode de réalisation de l'invention, l'ensemble de protection 100 comporte des premiers moyens de déconnexion thermiques. Ladite au moins une varistance 1 du module de protection 20 est reliée mécaniquement à des moyens d'entraînement 10 mobiles. Lesdits moyens d'entrainement reliés aux moyens d'actionnement mécanique 33 sont destinés à actionner un mécanisme de déclenchement 24 de l'appareil de coupure 21 en cas de défaut de fonctionnement de la varistance 1.

Ladite au moins une varistance 1 est reliée mécaniquement à des moyens d'entraînement 10 mobiles par un premier séparateur thermique P1. La fusion du premier séparateur thermique P1 en cas d'échauffement de la varistance libère le déplacement des moyens d'entraînement 10 mobiles. Le déplacement des moyens d'entrainement 10 est destiné agir sur les moyens d'actionnement mécanique 33 et provoquer l'ouverture des contacts électrique 23 de l'appareil de coupure 21.

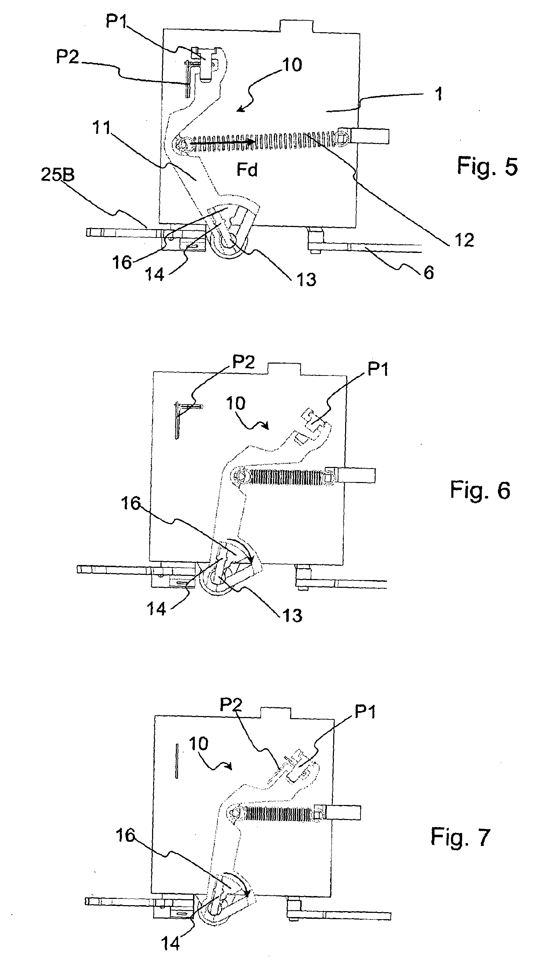

Comme représenté sur les figures 5 à 7, selon un mode préférentiel de réalisation de l'invention, le premier séparateur thermique P1 est fixé d'une part à la varistance 1 et d'autre part à un bras pivotant 11 des moyens d'entraînement 10 mobiles. Le bras pivotant 11 est maintenu mécaniquement par le premier séparateur thermique P1 dans une première position de fonctionnement, dite position armée. Des moyens élastiques 12 exercent une force de déplacement Fd sur le bras pivotant 11. La force de déplacement Fd est destinée entrainer le déplacement du bras pivotant 11 dans une seconde position de fonctionnement en cas de fusion du premier séparateur thermique P1. Le premier séparateur thermique P1 exerce une première force de retenu Fr1 sur les moyens d'entraînement 10. La fusion du premier séparateur thermique P1 provoque la rupture d'une liaison mécanique entre le premier séparateur P1 et le bras pivotant 11. La première force de retenu FR1 étant nulle, sous l'action de la force de déplacement Fd, ledit bras pivote autour d'un axe de rotation 13 de la position armée vers la seconde position de fonctionnement, dite position de déclenchement. La rotation de l'axe de rotation 13 agit sur les moyens d'actionnement mécanique 33.

Ledit premier séparateur thermique P1 comporte une première température de fusion T1 et une première constante de temps de fusion σ1.

La première température de fusion T1 du premier séparateur thermique P1 est déterminée de manière à être inférieure à la température maximale TmaxB tolérée au niveau des surfaces externes du boitier du module de protection 20 ramenée au niveau du premier séparateur thermique P1. La température maximale tolérée au niveau des surfaces externes du boitier est généralement fixée par des normes. Cette température est par exemple égale à 120 degrés Celcius. Cette température maximale ramenée au niveau du premier séparateur thermique P1, placé à l'intérieur du boitier permet d'établir un premier critère pour déterminer la première température de fusion T1.

En outre, la première température de fusion T1 du premier séparateur thermique P1 est déterminée de manière à être inférieure à la température d'échauffement maximale atteinte par la varistance 10 en cas de défaut de fonctionnement. Le défaut de fonctionnement est par exemple lié au vieillissement de la varistance, vieillissement provoquant un début de court-circuit. Cet échauffement de la varistance permet d'établir un second critère pour déterminer la première température de fusion T1.

La combinaison de ces deux critères permet de déterminer la première température de fusion T1. A titre d'exemple de réalisation, la première température fusion T1 de valeur égale à 125° degrés Celcius plus ou moins 15°c.

On entend par constante de temps de fusion une grandeur homogène à un temps caractérisant la rapidité pour un système étudié à atteindre une température de fusion dans des conditions de fonctionnement système. La constante de temps est souvent liée à la réponse du système étudié à une perturbation instantanée. En effet, la constant de temps de fusion σ1 est dépendante de l'architecture du module de protection 20 et notamment de la position du premier séparateur thermique P1 par rapport à la varistance 10, de la nature du matériau utilisé pour réaliser ledit séparateur, et aussi de sa géométrie globale..

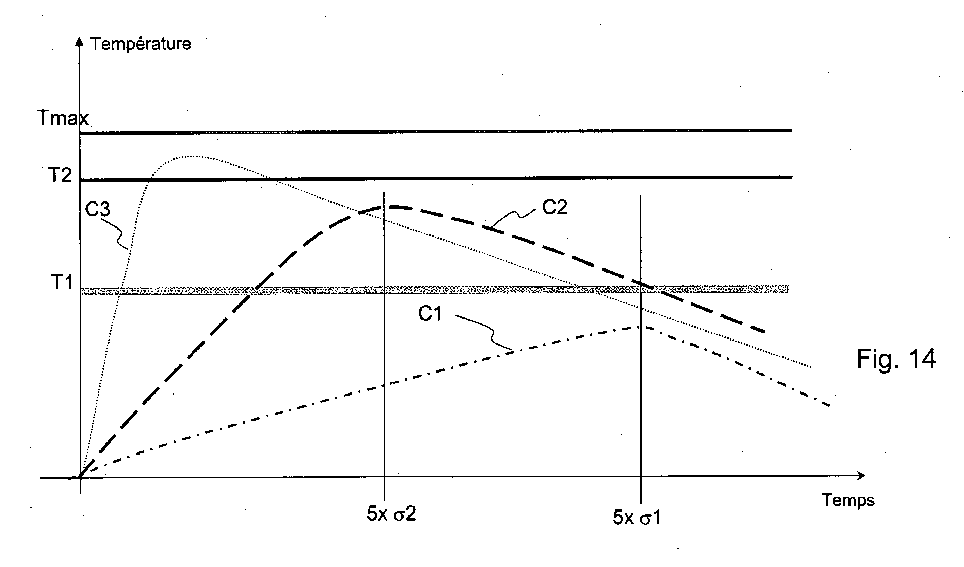

Comme représenté sur la figure 14, en cas de choc de foudre, l'échauffement du premier séparateur thermique P1 placé dans le boitier du dispositif de protection atteint une température maxi après un temps d'environ 25 secondes. La première courbe C1 représente la courbe d'échauffement du premier séparateur thermique P1 et la seconde courbe C2 représente la courbe d'échauffement du second séparateur thermique P2. Comme souhaité, le premier séparateur thermique P1 n'atteint pas sa température de fusion T1 en cas de choc de foudre. La troisième courbe C3, représente théoriquement l'échauffement de la varistance en cas de choc de foudre, notamment en cas de choc de type 10/350. A titre d'exemple, la première constante de temps de fusion σ1 est égale à 5 secondes.

Comme représenté sur les figures 5 à 7, selon un mode de développement particulier de l'invention, le premier séparateur thermique P1 est constitué d'une goupille en matériau plastique. La force de déplacement Fd exercée par les moyens élastiques 12 via le bras pivotant 11 des moyens d'entraînement 10 applique alors un effort de cisaillement sur ladite goupille. Selon une variante de réalisation non représenté, la force de déplacement Fd exercée par les moyens élastiques peut appliquer un effort de traction sur ladite goupille.

A titre d'exemple de réalisation, l'échauffement du premier séparateur thermique P1 est de préférence par conduction indirecte. Selon une variante non représentée, l'échauffement du premier séparateur thermique P1 est par conduction directe, le premier séparateur thermique étant alors traversé par le courant électrique qui traverse la varistance 1.

Selon un mode préférentiel de l'invention, la varistance 1 est reliée aux moyens d'entraînement 10 par un second séparateur thermique P2.

La fusion du second séparateur thermique P2 en cas d'échauffement de la varistance 1 libère le déplacement des moyens d'entraînement 10 mobiles. Le déplacement des moyens d'entrainement 10 est destiné agir sur les moyens d'actionnement mécanique 33 et provoquer l'ouverture des contacts électrique 23 de l'appareil de coupure 21.

Comme représenté sur les figures 5 à 7, selon un mode préférentiel de réalisation de l'invention, le second séparateur thermique P2 est fixé d'une part à la varistance et est fixé d'autre part au bras pivotant 11 des moyens d'entraînement 10 mobiles. Le bras pivotant 11 est maintenu mécaniquement par le second séparateur thermique P2 dans la position armée. Des moyens élastiques 12 exercent une force de déplacement Fd sur le bras pivotant 11. La force de déplacement Fd est destinée entrainer le déplacement du bras pivotant 11 dans une seconde position de fonctionnement en cas de fusion du second séparateur thermique P2. Le second séparateur thermique P2 exerce une seconde force de retenu Fr2 sur les moyens d'entraînement 10. La fusion du second séparateur thermique P2 provoque la rupture d'une liaison mécanique entre ledit séparateur P2 et le bras pivotant 11. Sous l'action de la force de déplacement Fd, ledit bras pivote autour d'un axe de rotation 13 de la position armée vers la position de déclenchement. La rotation de l'axe de rotation 13 agit sur les moyens d'actionnement mécanique 33.

Ledit second séparateur thermique P2 comporte une seconde température de fusion T2 et une seconde constante de temps de fusion σ2.

La seconde température de fusion T2 du second séparateur thermique P2 dépend de trois critères. Premièrement, ladite seconde température de fusion T2 est déterminée de manière à être inférieure à la température maximale de fonctionnement TmaxV supportée par la varistance 1. La température maximale tolérée TmaxV est une caractéristique intrinsèque du composant et est par exemple égale à 260° degrés Celcius.

En outre, la seconde température de fusion T2 du second séparateur thermique P2 est déterminée de manière à être supérieure à la température d'échauffement atteinte par la varistance en cas de choc de foudre, notamment des chocs de foudre de type 10/350.

Enfin, la seconde température de fusion T2 du second séparateur thermique P2 est déterminée de manière à être inférieure à la température d'échauffement de la varistance 1 atteinte suite à un défaut de type TOV.

La combinaison de ces trois critères permet de déterminer la seconde température de fusion T2.

A titre d'exemple de réalisation, la seconde une température de fusion T2 a une valeur égale à 195°Celcius plus ou moins 25°c.

Comme représenté sur la figure 14, en cas de choc de foudre, l'échauffement du second séparateur thermique P2 placé dans le boitier du module de protection 20 atteint une température maxi après un temps d'environ 5 secondes. La première courbe C1 représente la courbe d'échauffement du premier séparateur thermique P1 et la seconde courbe C2 représente la courbe d'échauffement du second séparateur thermique P2. La troisième courbe C3, représente théoriquement l'échauffement de la varistance en cas de choc de foudre, notamment en cas de choc de type 10/350. Comme souhaité en cas de choc de foudre, le second séparateur thermique P2, comme le premier séparateur P1, n'atteint pas sa température de fusion T2. A titre d'exemple, la seconde constante de temps de fusion σ2 est égale à 1 seconde.

A titre d'exemple de réalisation, l'échauffement du second séparateur thermique P2 est de préférence par conduction indirecte. Selon une variante non représentée, l'échauffement du second séparateur thermique P2 est par conduction indirecte, le second séparateur thermique étant alors traversé par le courant électrique qui traverse la varistance 1.

Selon un mode de développe de l'invention, le second séparateur thermique P2 est une soudure basse température. Comme représenté sur les figures 5, 6 et 7, à titre d'exemple de fabrication, la goupille thermique du premier séparateur thermique P1 est emboitée dans une équerre métallique. Ladite équerre métallique est reliée à la varistance 1 par la soudure basse température du second séparateur thermique P2.

Ainsi, selon un mode préférentiel de réalisation de l'invention, la seconde température de fusion T2 est supérieure à la première température de fusion T1, et la première constante de temps de fusion σ1 est supérieure à la seconde constante de temps de fusion σ2. A titre d'exemple de réalisation, la première constante de temps de fusion σ1 est au moins cinq fois supérieure à la seconde constante de temps de fusion σ2.

A titre d'exemple de réalisation représenté sur les figures 5 à 7, chaque bras pivotant 11 comporte une lumière 16 dans laquelle est positionné un doigt d'entrainement 14 fixé de manière solidaire avec l'axe de rotation 13. Le déplacement d'un bras pivotant 11 en cas de rupture d'un séparateur thermique P1, P2 déplace le doigt d'entrainement 14 placé initialement en appui sur un bord de la lumière 16 dudit bras. Les doigts d'entrainements 14 placées respectivement dans des lumières des autres bras pivotant se déplacent librement dans les lumières, lesdits autres bras restant immobiles.

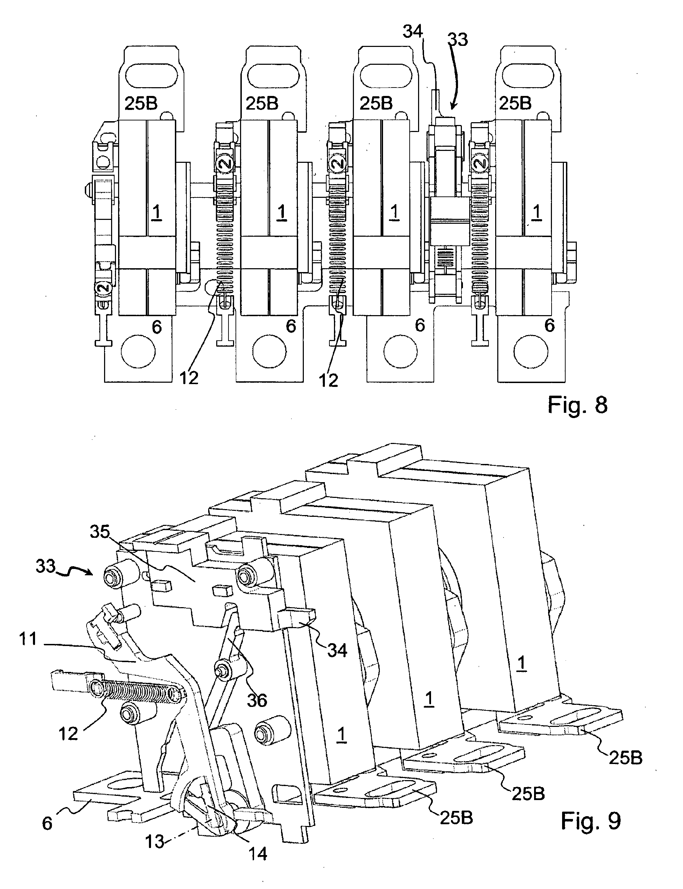

A titre d'exemple de réalisation, tel que représenté sur les figures 8 et 9, les moyens d'actionnement mécanique 33 comportent un bras d'actionnement 35 guidé en translation. Le mouvement en rotation de l'axe de rotation 13 entraine directement ou indirectement, via un levier 36, la translation du bras d'actionnement 35. Le bras d'actionnement 35 comporte à une extrémité un ergot 34 faisant sailli par rapport à un boitier du dispositif de protection. Cet ergot 34 est destiné venir actionner une barre de déclenchement (non représentée) de l'appareil de coupure 21.

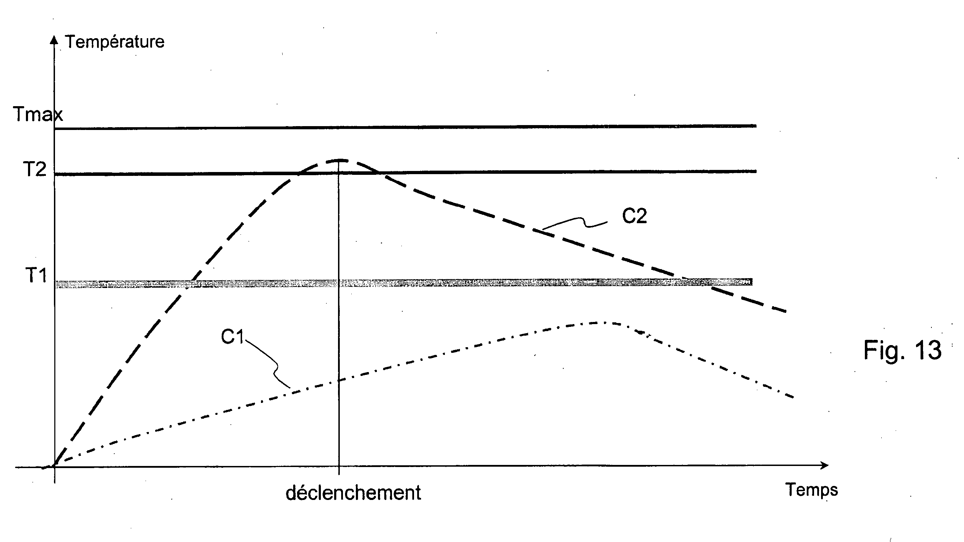

Le fonctionnement du module de protection 20 contre des surtensions selon l'invention en cas d'échauffement rapide de la varistance 1 est le suivant. L'échauffement rapide est notamment lié à la présence d'une TOV. A titre d'exemple, la première courbe C1 sur la figure 13 représente la courbe d'échauffement du premier séparateur thermique P1 et la seconde courbe C2 représente la courbe d'échauffement du second séparateur thermique P2. En présence de TOV, le second séparateur thermique P2 va s'échauffer rapidement du fait de sa faible constante de temps de fusion σ2. La seconde courbe C2 d'échauffement du second séparateur thermique P2 va atteindre rapidement la seconde température de fusion T2. Concomitamment, comme représenté sur la première courbe C1 de la figure 13, l'élévation de température du premier séparateur thermique P1 est relativement faible. En pratique, le premier séparateur thermique P1 est loin d'avoir atteint sa température de fusion au moment où le second premier séparateur thermique atteint sa température de fusion T2.

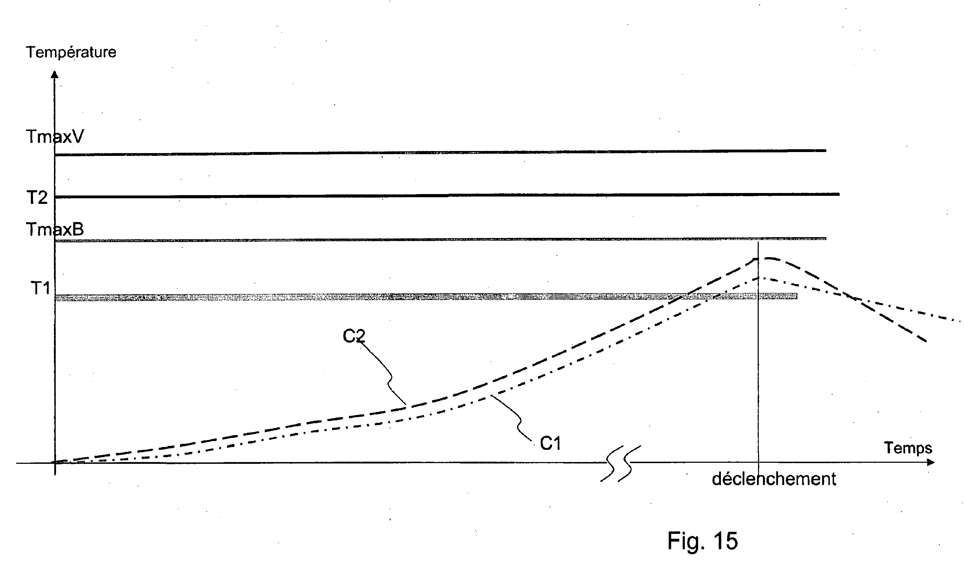

Le fonctionnement du module de protection 20 contre des surtensions selon l'invention en cas d'échauffement lent de la varistance 1 est le suivant. A titre d'exemple, la première courbe C1 sur la figure 15 représente la courbe d'échauffement du premier séparateur thermique P1 et la seconde courbe C2 représente la courbe d'échauffement du second séparateur thermique P2. Les deux séparateurs thermiques P1, P2 vont s'échauffer lentement. Les première et seconde courbes C1, C2 d'échauffement des deux séparateurs thermique P1, P2 sont sensiblement parallèles, voire confondues. La première courbe C1 d'échauffement du premier séparateur thermique P2 va atteindre la première température de fusion T1 avant que le boitier du module de protection ait atteint sa température maximale TmaxB acceptable.

Grâce à cette combinaison en série des deux séparateurs thermiques P1, P2, la protection thermique du module de protection 20 est à la fois opérationnelle pour des phénomènes transitoire rapide et des phénomènes plus lents. En outre, le fonctionnement des séparateurs thermiques garantit un non déclenchement du dispositif lors d'un choc de foudre.

Selon un premier mode de développement, les forces de retenu des premier et second séparateurs thermiques P1, P2 s'exercent de manière série sur les moyens d'entraînement 10. La fusion d'un séparateur thermique entraine successivement l'annulation de l'une des forces de retenu Fr1, Fr2 et le déplacement des moyens d'entrainement. Les deux forces de retenu Fr1, Fr2 sont respectivement d'intensité supérieure à celle de la force de déplacement Fd.

Selon un second mode de développement, les forces de retenu des premier et second séparateurs thermiques P1, P2 s'exercent de manière parallèle sur les moyens d'entraînement 10. La fusion d'un des séparateurs thermiques entraine successivement l'annulation d'une des deux forces de retenu Fr1, Fr2, puis l'annulation de l'autre force de retenu Fr1, Fr2 et enfin le déplacement des moyens d'entrainement 10. Les forces de retenu Fr1, Fr2 sont respectivement d'intensité inférieure à celle de la force de déplacement Fd.

Selon une variante de réalisation des premiers moyens de déconnexion thermique, il est possible de ne conserver que le premier séparateur thermique P1. Dans ce cas, la protection en thermique du composant parasurtenseur sera correctement effectuée en cas de courant de fuite de faible amplitude due au vieillissement de ce même composant. Cependant, en cas de courant de défaut de plus forte amplitude provenant d'une TOV, le séparateur thermique P1, n'est pas suffisamment rapide trop éviter une mise en court-circuit du composant parasurtenseur. Cette limitation dans le fonctionnement serait représentée par une zone non couverte par les déconnecteurs sur la figure 12. Cette limitation peut être minimisée en augmentant la sensibilité des seconds moyens de déconnexion électroniques électronique. Néanmoins, pour augmenter cette sensibilité, il est nécessaire d'augmenter le nombre d'ampère.tours au primaire du circuit. Or, cette option va à l'encontre de la diminution de la tension de protection du dispositif global.

Selon une autre variante de réalisation des premiers moyens de déconnexion thermique, il est possible de ne conserver que le premier séparateur thermique P2. Dans ce cas de figure, la protection contre les TOV sera correctement effectuée. Cependant, en cas d'échauffement lent de la varistance du à un courant de fuite, il n'est pas garanti que la température sur les parties externes du dispositif ne dépassent pas les limites normatives autorisées. Une option alors consiste à abaisser la température de fusion T2 du séparateur thermique T2 pour anticiper la fusion de celui-ci. Cependant, le risque, en mettant en oeuvre cette option, est de provoquer la fusion du séparateur thermique T2 en cas de choc de foudre de forte amplitude (typiquement 25kA 10/350µs)

Selon un mode de réalisation de l'invention, l'ensemble de protection comporte des seconds moyens de déconnexion électroniques. Lesdits moyens de déconnexion électroniques comportent au moins un capteur de courant 51 relié à des moyens électroniques de traitement 50.

Selon le mode particulier de réalisation tel que représenté sur la figure 3, quatre capteur de courants sont destinés respectivement mesurer les courants électriques circulant dans chacune des quatre varistances 1. En outre, les capteurs utilisés fournissent à la fois l'énergie pour alimenter les moyens électroniques de traitement 50 et les signaux de mesure permettant de détecter le seuil de déclenchement. Les moyens électroniques de traitements disposent en sortie d'une capacité chargée par les capteurs de courant. Cette capacité est destinée à alimenter un actionneur électromagnétique lorsqu'un seuil de déclenchement est dépassé. Lorsque l'actionneur électromagnétique est activé, il provoque l'ouverture mécanisme de déclenchement 24 par libération de l'accrochage.

Selon un mode préférentiel de réalisation, les seconds moyens électroniques de déconnexion comportent des moyens de mesure de courant 51 reliés à des moyens de traitement 50. De préférence, ces moyens de mesure sont des tores magnétiques capables de fournir de l'énergie à partir du bobinage secondaire. Lors du passage de courant dans le circuit primaire, ces tores magnétiques accumulent de l'énergie en chargeant une capacité reliée au circuit secondaire. Lorsque les moyens de traitements électroniques détectent qu'un seuil de déclenchement est dépassé, l'énergie stockée dans la capacité est libérée dans un actionneur électromagnétique. Cet actionneur électromagnétique provoque alors déclenchement du mécanisme 24 par la libération du système d'accrochage.

Les seconds moyens électroniques sont nécessaires pour obtenir une sensibilité suffisante afin de provoquer le déclenchement du disjoncteur à partir de faible intensité 30A et de minimiser l'impédance totale du parafoudre.

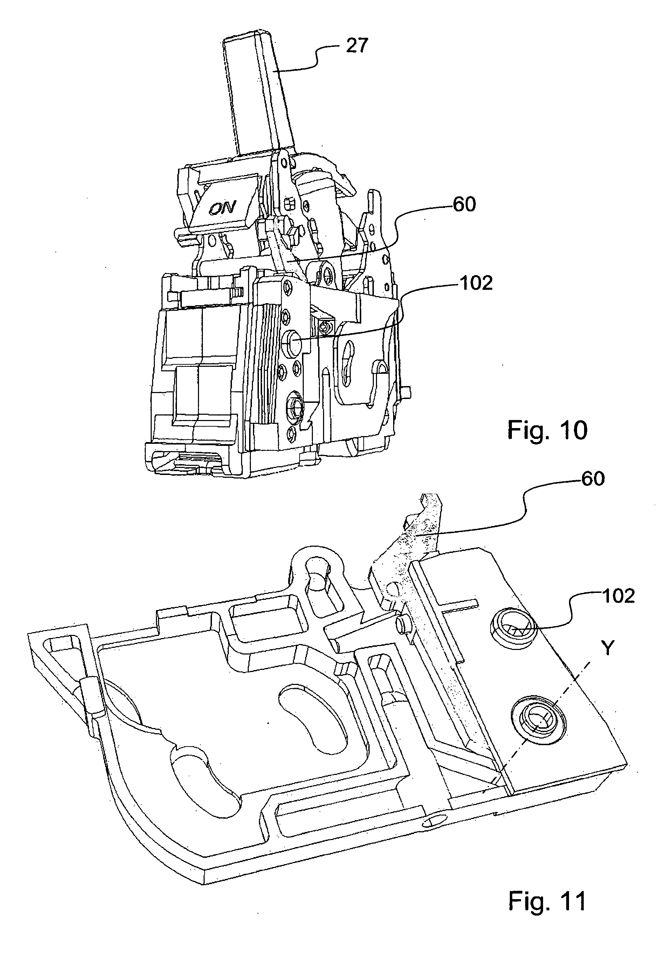

Selon un mode de réalisation de l'invention, l'ensemble de protection comporte des troisièmes moyens de déconnexion mécaniques. Comme représenté sur les figures 1, 10 et 11, les troisièmes moyens mécaniques de déconnexion comportent un percuteur 60 relié au volume interne de la chambre d'extinction d'arc 70 via un conduit 72 des gaz de coupure. Une surpression dans la chambre d'extinction d'arc 70 provoque le déplacement instantané du percuteur 60. Le déplacement du percuteur est destiné à actionner le mécanisme de déclenchement 24 pour provoquer l'ouverture des contacts électriques. Selon un exemple de réalisation, le percuteur 60 comporte un bras rotatif apte à tourner autour d'un axe de rotation Y. La surpression générée à l'intérieur du conduit 72 des gaz de coupure entraine la rotation du bras rotatif. Une extrémité dudit bras vient actionner une barre de déclenchement de l'appareil de coupure provoquant l'ouverture des contacts électriques 23.

Plus généralement, il est souhaitable d'éviter la mise en court-circuit de la varistance dans toute circonstance et notamment en cas de choc de foudre générant un courant de foudre supérieur à la capacité énergétique de la varistance (25kA 10/350µs). Ce courant provoque une répulsion des contacts importantes et une montée en pression suffisante pour provoquer le déclenchement du mécanisme par le piston. Dans ce cas, la destruction de la varistance et le déclenchement des moyens de déconnexion mécaniques sont simultanés. Ce mode de fonctionnement évite le déclenchement des protections amont d'alimentation du réseau électrique. Selon le mode de développement de l'invention, la surpression entraine le déplacement du percuteur qui vient agir directement sur le mécanisme de déclenchement 24 et assurer une protection très rapide dans le cas d'un choc de foudre de forte amplitude dépassant la capacité d'écoulement du composant parasursenteur.

Les moyens de déconnexion mécanique possèdent trois modes de fonctionnement.

Le premier mode de fonctionnement consiste à protéger le composant parasurtenseur contre des courants des surtensions temporaires de forte amplitude apparaissant sur le réseau. Ces surtensions, appelées par la suite TOV (Temporary Over Voltage). En présence de TOV de forte amplitude, les moyens de déconnexion mécanique permettent de protéger la varistance très rapidement pour éviter que celle-ci ne soit détruite et ne se mette en court-circuit.

Le deuxième mode de fonctionnement consiste à protéger le composant parasurtenseur en cas de choc de foudre de forte amplitude générant des courants de foudre supérieur à 25kA dépassant la capacité énergétique maximum du composant parasurtenseur. Dans ce cas de fonctionnement, la varistance peut être détruite mais le moyens de déconnexion mécanique pourront provoquer simultanément le déverrouillage du mécanisme et l'ouverture des contacts. Grace à ce second mode de fonctionnement, on constate que, malgré la destruction composant parasurtenseur, le courant de court-circuit est limité de façon quasiinstantanée de telle sorte que les effets du court-circuit seront très nettement diminués. Par exemple, les disjoncteurs de protection placés en amont ne déclencheront pas.

Le troisième mode de protection assure une fonction de sécurité redondante vis-à-vis des protections assurées par les premiers moyens de déconnexion thermique et les seconds moyens de déconnexion électronique. En effet, si malgré la mise en cascade de l'ensemble des moyens de déconnexion, la varistance est détruite et génère un court-circuit alors les moyens de déconnexion mécanique interviennent comme protection ultime pour déclencher le mécanisme et provoquer l'ouverture des contacts. A titre d'exemple, cette mise en court-circuit du composant parasurtenseur peut se produire si ledit composant est soumis à plusieurs chocs de foudres répétés.

Comme représenté sur la figure 12, les trois moyens de déconnexion de l'ensemble de protection 100 fonctionnant de manière coordonnée afin de garantir que le composant parasurtenseur telle que la varistance ne passera pas en court-circuit quelque soit le mode de sollicitation et l'intensité du courant de défaut. Autrement dit, les moyens de déconnexion sont aptes à commander le mécanisme de déclenchement 24 avant que ladite varistance 1 n'atteigne son niveau énergétique Maxi de fonctionnement.

Les premiers moyens de déconnexion thermiques des moyens de déconnexion comprennent un premier seuil énergétique de déconnexion S1 pour protéger la varistance 1 contre des courants électriques dits faibles inférieurs à un premier niveau de courant I1. Tel que représenté sur la figure 12, ce seuil de déclenchement des premiers moyens de déconnexion thermiques est représenté sur une première courbe de déclenchement temps/courant Pt.

Les seconds moyens de déconnexion électroniques comprennent un second seuil énergétique de déconnexion S2 pour protéger la varistance contre des courants électriques dits moyens compris entre un premier et second niveau intermédiaire de courant I2A, I2B. Tel que représenté sur la figure 12, ce seuil de déclenchement des seconds moyens de déconnexion électroniques est représenté sur une seconde courbe de déclenchement temps/courant Pe.

Les troisièmes moyens de déconnexion mécanique comprennent un troisième seuil énergétique de déconnexion S3 pour protéger la varistance contre des courants électriques dits forts supérieurs à un troisième niveau de courant I3. Tel que représenté sur la figure 12, ce seuil de déclenchement des troisième moyens de déconnexion mécaniques est représenté sur une troisième courbe de déclenchement temps/courant Pm.

Les trois seuils de déconnexion énergétique de déconnexion S1, S2, S3 sont inférieurs au seuil énergétique Maxi de fonctionnement du composant parasurtenseur. Ledit seuil énergétique Maxi de fonctionnement du composant parasurtenseur est représenté sur une courbe de fonctionnement P1.

Afin d'assurer une protection efficace du composant parasurtenseur et limiter au mieux les risques de mise en court-circuit dudit composant, il est préférable que les courbes Pt, Pe, Pm respective des trois moyens de déconnexion présentent des zones de recouvrement (Zone A et Zone B). Ainsi selon un mode de réalisation de l'invention tel que représenté sur la figure 12, le premier niveau de courant I1 est supérieur ou égale au premier niveau intermédiaire de courant I2A, le second niveau intermédiaire de courant I2B strictement supérieur au premier niveau intermédiaire de courant I2A ; et le second niveau intermédiaire de courant I2B supérieur ou égal au troisième niveau de courant I3 (I2A <= I1 ; I2B > 12A ; 13 <= I2B).

Comme représenté sur la figure 12, l'ensemble de protection doit déclencher à partir de 30A et assurer ainsi une zone de recouvrement avec la protection thermique assuré par les premiers moyens thermique de déconnexion (zone A). En effet, en absence de zone de recouvrement (Zone A), il est possible que le composant parasurtenseur se mette en court-circuit sans que ce défaut soit vu par un des dispositifs de déconnexion.

Par ailleurs, les seconds moyens électroniques de déconnexion n'augmentent pas l'impédance totale de l'ensemble de protection et n'augmentent donc pas la tension de protection du dispositif global. La fonction parafoudre est alors garantie en assurant une tension aux bornes de l'ensemble inférieur à 2,5 kV lorsqu'un courant de foudre de 25kA passe à travers celui-ci.

Ainsi, l'ensemble de protection comporte un système de déconnexion coordonné à trois étages dont le fonctionnement est schématisé sur la figure 12.

Les trois moyens de déconnexion de l'ensemble de protection fonctionnent de ma manière synchronisée et/ou coordonnée afin d'assurer une protection du composant parasurtenseur sur toute sa plage de fonctionnement. Le risque de mise en court-circuit du composant parasurtenseur sera systématiquement détecté par l'un moyens de déconnexion.

Le rôle des premiers moyens de déconnexion thermiques est double. Le premier est de faire en sorte que l'échauffement de la varistance ne provoque pas, par conduction thermique, d'élévation excessive des parties externes du dispositif. La deuxième fonction du déconnecteur thermique est d'éviter la destruction de la varistance due à un échauffement lent. On constate que la rapidité d'intervention de cette déconnexion thermique est par construction limitée à 1 seconde pour un courant de défaut de 30A. Ce premier niveau de courant I1 définit la limite maximum d'intervention des premiers moyens de déconnexion thermiques.

Selon le mode préférentiel de fonctionnement de l'ensemble de protection tel que représenté sur la figure 12, les seconds moyens de déconnexion électroniques sont destinés intervenir pour des courants électriques de valeurs inférieures à celui du premier niveau de courant I1. En effet, une première zone de recouvrement (Zone A) entre la courbe représentative du seuil de déclenchement des premiers moyens de déconnexion thermiques Pt et celle représentative du seuil de déclenchement des seconds moyens de déconnexion électroniques Pe est réalisée pour tenir compte de la dispersion de ces deux dispositifs de déconnexion en série. Ce premier niveau intermédiaire de courant I2A définit la limite minimale d'intervention des seconds moyens de déconnexion électroniques. Le point caractéristique d'intervention des seconds moyens de déconnexion électroniques est donc fixé à 20A en 0,5s. En outre, la plage de fonctionnement des seconds moyens de déconnexion électroniques permet de protéger le composant parasurtenseur jusqu'à 3500A dans une durée inférieure à 3.5ms. Ce second niveau intermédiaire de courant I2B définit la limite maximum d'intervention des seconds moyens de déconnexion électroniques. Au delà de ce Ce second niveau intermédiaire de courant I2B, la protection est assurée par les troisièmes moyens de déconnexion mécaniques.

Comme précédemment, une seconde zone de recouvrement (Zone B) entre la courbe représentative du seuil de déclenchement des seconds moyens de déconnexion électronique Pe et celle représentative du seuil de déclenchement des troisièmes moyens de déconnexion électroniques Pm est réalisée pour tenir compte de la dispersion de ces deux dispositifs de déconnexion en série.

Les troisièmes moyens de déconnexion électroniques sont donc ajusté pour intervenir en moins de 4ms pour un courant de 3000A (point 13). A titre d'exemple de réalisation, un ressort de pré-contrainte peut être utilisé pour cet effet. Ce troisième niveau de courant I3 définit la limite minimale d'intervention des troisièmes moyens de déconnexion mécaniques. Compte tenu de la valeur du troisième niveau de courant 13, les troisièmes moyens de déconnexion électroniques sont utilisés pour tous les courants de défauts supérieurs à 3000A. Dans le cas particulier d'un courant de foudre supérieur à 25kA qui dépasse la capacité énergétique maximum de la varistance, on utilise également ces troisièmes moyens de déconnexion électroniques pour déclencher instantanément le mécanisme.

Au global et pour chacun des 3 dispositifs de déconnexion, on vérifie séparément qu'il n'y a pas d'intervention pour des courants de foudre inférieur à 25kA 10/350µs.

## Revendications

1. Ensemble de protection contre les surtensions comprenant :
- un module de protection (20) contre des surtensions comportant au moins une varistance (1) ayant un seuil énergétique Maxi de fonctionnement ;
- un appareil de coupure électrique (21) comprenant des entrées (22) destinées à être connectées à une ligne à protéger, des contacts principaux (23) commandés par un mécanisme de déclenchement (24), et des sorties (25A) connectés au module de protection contre les surtensions (20), les moyens d'actionnement mécanique (33) dudit module étant interconnectés aux moyens de déclenchement (24, 27) pour actionner l'ouverture des contacts principaux (23) ;
- des moyens de déconnexion aptes à commander le mécanisme de déclenchement (24) avant que ladite varistance n'atteigne son niveau énergétique Maxi de fonctionnement ;
**caractérisé en ce que** les moyens de déconnexion comportent :
- des premiers moyens de déconnexion thermique comprenant un premier seuil énergétique de déconnexion (S1) pour protéger la varistance contre des courants électriques dits faibles inférieurs à un premier niveau de courant (I1) ;
- des seconds moyens de déconnexion électronique comprenant un second seuil énergétique de déconnexion (S2) pour protéger la varistance contre des courants électriques dits moyens compris entre un premier et second niveau intermédiaire de courant (I2A, I2B) ; et
- des troisièmes moyens de déconnexion mécanique comprenant un troisième seuil énergétique de déconnexion (S3) pour protéger la varistance contre des courants électriques dits forts supérieurs à un troisième niveau de courant (I3) ;
les trois seuils de déconnexion énergétique (S1, S2, S3) étant inférieurs au seuil énergétique Maxi de fonctionnement.

2. Ensemble de protection selon la revendication 1, **caractérisé en ce que** le premier niveau de courant (I1) est supérieur ou égale au premier niveau intermédiaire de courant (I2A), le second niveau intermédiaire de courant (I2B) strictement supérieur au premier niveau intermédiaire de courant (I2A); et le second niveau intermédiaire de courant (I2B) supérieur ou égal au troisième niveau de courant I3 (I2A <= I1 ; I2B > 12A ; I3 <= I2B).

3. Ensemble de protection selon l'une des revendications 1 ou 2, **caractérisé en ce que** les premiers moyens de déconnexion thermique reliés mécaniquement à la varistance comportent :
- un premier séparateur thermique (P1), la fusion du premier séparateur thermique (P1) en cas d'échauffement de la varistance agissant sur les moyens d'actionnement mécanique (33), ledit premier séparateur thermique (P1) comportant une première constante de temps de fusion (σ1) et une première température de fusion (T1),
- un second séparateur thermique (P2), la fusion du second séparateur thermique (P2) en cas d'échauffement de la varistance (1) agissant sur les moyens d'actionnement mécanique (33), ledit second séparateur thermique (P2) comportant une seconde constante de temps de fusion (σ2) et une seconde température de fusion (T2), la seconde température de fusion (T2) étant supérieure à la première température de fusion (T1), et la première constante de temps de fusion (σ1) étant supérieure à la seconde constante de temps de fusion (σ2).

4. Ensemble de protection selon la revendication 3, **caractérisé en ce que** les premiers moyens de déconnexion thermique comportent des moyens élastiques (12) fournissant une force de déplacement (Fd) destinée à entrainer en déplacement des moyens d'entraînement (10) d'une première la position armée vers une position de déclenchement, les moyens d'entraînement (10) étant retenu mécaniquement en position armée par lesdits premier et second séparateurs thermiques (P1, P2), la fusion d'un des deux séparateurs thermiques libérant le déplacement des moyens d'entraînement (10).

5. Ensemble de protection selon la revendication 4, **caractérisé en ce que** le premier séparateur thermique (P1) et le second séparateur thermique (P2) exercent respectivement une première et une seconde forces de retenu (Fr1, Fr2) sur les moyens d'entraînement (10), lesdites forces de retenu s'exerçant de manière série sur les moyens d'entraînement (10), la fusion d'un séparateur thermique entrainant successivement l'annulation de l'une des forces de retenu (Fr1, Fr2) et la libération du déplacement des moyens d'entrainement (10).

6. Ensemble de protection selon la revendication 5, **caractérisé en ce que** le premier séparateur thermique (P1) et le second séparateur thermique (P2) exercent respectivement un première et une seconde forces de retenu (Fr1, Fr2) sur les moyens d'entraînement (10), lesdites forces de retenu s'exerçant de manière parallèle sur les moyens d'entraînement (10), la fusion d'un séparateur thermique entrainant successivement l'annulation d'une des deux forces de retenu (Fr1, Fr2), l'annulation de l'autre force de retenu (Fr1, Fr2) et le déplacement des moyens d'entrainement (10).

7. Ensemble de protection selon l'une quelconque des revendications précédentes, **caractérisé en ce que** lesdits seconds moyens de déconnexion électronique comportent des moyens de mesure de courant reliés à des moyens de traitement.

8. Ensemble de protection selon l'une quelconque des revendications précédentes, **caractérisé en ce que** lesdits troisièmes moyens de déconnexion comportent un piston associé à une chambre de coupure de appareil de coupure électrique (21) dans laquelle est intégré un contact électrique.

9. Ensemble de protection selon la revendication 9, **caractérisé en ce que** ledit piston se déplace lors de l'apparition une onde de pression due à la répulsion du contact électrique en présence de courants électriques dits forts, le déplacement du piston commandant le mécanisme de déclenchement (24).

## Patentansprüche

1. Überspannungs-Schutzeinrichtung mit
- einem Überspannungs-Schutzmodul (20), das mindestens einen Varistor (1) mit einem maximalen energetischen Betriebs-Schutzpegel umfasst,
- einem elektrischen Schaltgerät (21) mit Eingängen (22) zum Anschluss an eine zu schützende Leitung, über einen Auslösemechanismus (24) angesteuerten Hauptkontakten (23) sowie an das Überspannungs-Schutzmodul (20) angeschlossenen Ausgängen (25A), wobei die mechanischen Betätigungsmittel (33) des genannten Moduls mit den Auslösemitteln (24, 27) verbunden sind, um die Abschaltung der Hauptkontakte (23) zu bewirken,
- sowie Abschaltmitteln, die dazu dienen, den Auslösemechanismus 24 anzusteuern, bevor der Varistor 1 seinen maximalen energetischen Betriebs-Schutzpegel erreicht,
**dadurch gekennzeichnet, dass** die Abschaltmittel
- erste thermische Abschaltmittel mit einem ersten energetischen Ansprechwert (S1) zum Schutz des Varistors gegen sogenannte kleine elektrische Ströme, die unterhalb eines ersten Stromwertes I1 liegen,
- zweite elektronische Abschaltmitteln mit einem zweiten energetischen Ansprechwert (S2) zum Schutz des Varistors gegen sogenannte mittelhohe elektrische Ströme, die zwischen einem ersten und einem zweiten mittleren Stromwert (I2A, I2B) liegen, sowie
- dritte mechanische Abschaltmittel mit einem dritten energetischen Ansprechwert (S3) zum Schutz des Varistors gegen sogenannte hohe elektrische Ströme umfassen, die über einem dritten Stromwert (I3) liegen,
wobei die drei energetischen Ansprechwerte (S1, S2, S3) unter dem maximalen energetischen Betriebs-Schutzpegel liegen.

2. Schutzeinrichtung nach Anspruch 1, **dadurch gekennzeichnet, dass** der erste Stromwert (I1) größer oder gleich dem ersten mittleren Stromwert (I2A), der zweite mittlere Stromwert (I2B) deutlich höher als der erste mittlere Stromwert (I2A) und der zweite mittlere Stromwert (I2B) größer oder gleich dem dritten Stromwert (I3) (I2A <= I1 ; I2B > I2A ; I3 <= I2B) ist.

3. Schutzeinrichtung nach einem der Ansprüche 1 oder 2 **dadurch gekennzeichnet, dass** die mechanisch mit dem Varistor verbundenen ersten thermischen Abschaltmittel
- einen ersten thermischen Trenner (P1), dessen Schmelzen als Folge einer Erwärmung des Varistors die Beaufschlagung der mechanischen Betätigungsmittel (33) bewirkt, wobei der genannte erste thermische Trenner (P1) eine erste Schmelz-Zeitkonstante (σ1) sowie eine erste Schmelztemperatur (T1) aufweist,
- und einen zweiten thermischen Trenner (P2) umfassen, dessen Schmelzen durch Erwärmung des Varistors (1) die Beaufschlagung der mechanischen Betätigungsmittel (33) bewirkt, wobei der genannte zweite thermische Trenner (P2) eine zweite Schmelz-Zeitkonstante (σ2) sowie eine zweite Schmelztemperatur (T2) aufweist, die zweite Schmelztemperatur (T2) höher ist als die erste Schmelztemperatur (T1) und die erste Schmelz-Zeitkonstante (σ1) größer ist als die zweite Schmelz-Zeitkonstante (σ2).

4. Schutzeinrichtung nach Anspruch 3, **dadurch gekennzeichnet, dass** die ersten thermischen Abschaltmittel Federmittel (12) zur Erzeugung einer Verschiebekraft (Fd) umfassen, die dazu dient, Antriebsmittel (10) von einer ersten Spannstellung in eine Auslösestellung zu verbringen, wobei die Antriebsmittel (10) durch den genannten ersten und zweiten thermischen Trenner (P1, P2) mechanisch in der Spannstellung gehalten werden und das Schmelzen eines der thermischen Trenner eine Verschiebung der Antriebsmittel (10) bewirkt.

5. Schutzmodul nach Anspruch 4, **dadurch gekennzeichnet, dass** der erste thermische Trenner (P1) und der zweite thermische Trenner (P2) eine erste bzw. zweite Rückhaltekraft (Fr1, Fr2) auf die Antriebsmittel (10) ausüben, welche Rückhaltekräfte seriell auf die Antriebsmittel (10) wirken, so dass das Schmelzen eines thermischen Trenners zunächst die Aufhebung einer der Rückhaltekräfte (Fr1, Fr2) und danach die Freisetzung der Verschiebung der Antriebsmittel bewirkt.

6. Schutzeinrichtung nach Anspruch 5, **dadurch gekennzeichnet, dass** der erste thermische Trenner (P1) und der zweite thermische Trenner (P2) eine erste bzw. zweite Rückhaltekraft (Fr1, Fr2) auf die Antriebsmittel (10) ausüben, welche Rückhaltekräfte parallel auf die Antriebsmittel (10) wirken, so dass das Schmelzen eines thermischen Trenners zunächst die Aufhebung einer der beiden Rückhaltekräfte (Fr1, Fr2), dann die Aufhebung der anderen Rückhaltekraft (Fr1, Fr2) und danach die Verschiebung der Antriebsmittel (10) bewirkt.

7. Schutzeinrichtung nach irgendeinem der vorhergehenden Ansprüche, **dadurch gekennzeichnet, dass** die genannten zweiten elektronischen Abschaltmittel mit Verarbeitungsmitteln verbundene Strommessmittel umfassen.

8. Schutzeinrichtung nach irgendeinem der vorhergehenden Ansprüche, **dadurch gekennzeichnet, dass** die dritten Abschaltmittel einen Kolben umfassen, welcher einer Schaltkammer des elektrischen Schaltgeräts (21) mit einem darin angeordneten elektrischen Kontakt zugeordnet ist.

9. Schutzeinrichtung nach Anspruch 9, **dadurch gekennzeichnet, dass** sich der genannte Kolben unter Einwirkung einer Druckwelle verschiebt, die beim Fließen sogenannter hoher elektrischer Ströme durch das Rückprallen des Kontakts erzeugt wird, wobei durch die Verschiebung des Kolbens der Auslösemechanismus (24) beaufschlagt wird.

## Claims

1. An overvoltage protection unit comprising:
- an overvoltage protection module (20) comprising at least one varistor (1) having a maximum operating power threshold;
- an electric switchgear apparatus (21) comprising inputs (22) designed to be connected to a line to be protected, main contacts (23) controlled by a trip mechanism (24), and outputs (25A) connected to the overvoltage protection module (20), the mechanical actuating means (33) of said module being interconnected to the trip means (24, 27) to actuate opening of the main contacts (23);
- disconnection means designed to command the trip mechanism (24) before said varistor reaches its maximum operating power level;
**characterized in that** the disconnection means comprise:
- first thermal disconnection means comprising a first disconnection power threshold (S1) to protect the varistor against electric currents called weak currents lower than a first current level (I1);
- second electronic disconnection means comprising a second disconnection power threshold (S2) to protect the varistor against electric currents called medium currents comprised between a first and a second intermediate current level (I2A, I2B); and
- third mechanical disconnection means comprising a third disconnection power threshold (S3) to protect the varistor against electric currents called strong currents higher than a third current level (I3);
the three power disconnection thresholds (S1, S2, S3) being lower than the maximum operating power threshold.

2. The protection unit according to claim 1, **characterized in that** the first current level (11) is higher than or equal to the first intermediate current level (I2A), the second intermediate current level (I2B) is strictly higher than the first intermediate current level (I2A), and the second intermediate current level (I2B) is higher than or equal to the third current level I3 (I2A <= I1; I2B > I2A; I3 <= I2B).

3. The protection unit according to one of claims 1 or 2, **characterized in that** the first thermal disconnection means mechanically connected to the varistor comprise:
- a first thermal separator (P1), melting of the first thermal separator (P1) in case of overheating of the varistor acting on the mechanical actuating means (33), said first thermal separator (P1) comprising a first melting time constant (σ1) and a first melting temperature (T1),
- a second thermal separator (P2), melting of the second thermal separator (P2) in case of overheating of the varistor (1) acting on the mechanical actuating means (33), said second thermal separator (P2) comprising a second melting time constant (σ2) and a second melting temperature (T2), the second melting temperature (T2) being higher than the first melting temperature (T1) and the first melting time constant (σ1) being higher than the second melting time constant (σ2).

4. The protection unit according to claim 3, **characterized in that** the first thermal disconnection means comprise flexible means (12) providing a displacement force (Fd) designed to move drive means (10) in displacement from a first loaded position to a tripped position, the drive means (10) being mechanically retained in the loaded position by said first and second thermal separators (P1, P2), melting of one of the two thermal separators releasing displacement of the drive means (10).

5. The protection unit according to claim 4, **characterized in that** the first thermal separator (P1) and the second thermal separator (P2) respectively exert a first and a second retaining force (Fr1, Fr2) on the drive means (10), said retaining forces being exerted in serial manner on the drive means (10), melting of a thermal separator successively resulting in cancelling of one of the retaining forces (Fr1, Fr2) and in releasing displacement of the drive means (10).

6. The protection unit according to claim 5, **characterized in that** the first thermal separator (P1) and the second thermal separator (P2) respectively exert a first and a second retaining force (Fr1, Fr2) on the drive means (10), said retaining forces being exerted in parallel manner on the drive means (10), melting of a thermal separator successively resulting in cancelling of one of the two retaining forces (Fr1, Fr2), cancelling of the other retaining force (Fr1, Fr2) and displacement of the drive means (10).

7. The protection unit according to any one of the foregoing claims, **characterized in that** said second electronic disconnection means comprise current measuring means connected to processing means.

8. The protection unit according to any one of the foregoing claims, **characterized in that** said third disconnection means comprise a piston associated with an arc chute of an electric switchgear apparatus (21) in which an electric contact is integrated.

9. The protection unit according to claim 9, **characterized in that** said piston moves when a pressure wave occurs due to repulsion of the electric contact in the presence of electric currents called strong currents, movement of the piston commanding the trip mechanism (24).
